# FASCICULE DE BREVET EUROPEEN

(11) **EP 0 794 716 B1**
(45) Date de publication et mention de la délivrance du brevet: **04.07.2001**
(21) Numéro de dépôt: 95936386.2
(22) Date de dépôt: 26.10.1995
(51) Int. Cl.: A47B 47/04, F16B 12/00, A47B 47/06

(54) **PROCEDE DE FABRICATION PAR COINCAGE SANS OUTILS, D'UNE STRUCTURE RIGIDE AU DEPART DE PANNEAUX DECOUPES ET DE CHASSIS ET UNE STRUCTURE RIGIDE TRIDIMENSIONNELLE**
HERSTELLUNGSVERFAHREN EINER AUS PLATTEN UND RAHMEN DURCH VERTEILEN OHNE WERKZEUGE GEBILDETEN STARREN STRUKTUR UND EINE DREIDIMENSIONALE STRUKTUR
METHOD FOR MAKING A RIGID CONSTRUCTION BY WEDGING TOGETHER CUT-OUT PANELS AND FRAMES WITHOUT USING TOOLS AND A THREE-DIMENSIONAL STRUCTURE

(30) Priorité: 03.11.1994 BE 9400993
(43) Date de publication de la demande: 17.09.1997
(73) Titulaire: Chennaux, Alain, 1180 Bruxelles (BE)
(72) Inventeur: Chennaux, Alain, 1180 Bruxelles (BE)
(74) Mandataire: Colens, Alain
(86) Numéro de dépôt international: BE9500098
(87) Numéro de publication internationale: WO9614000

(56) Documents cités:
- DE-A- 1 737 857
- DE-B- 1 125 611
- FR-A- 2 594 018
- FR-A- 2 650 865
- GB-A- 2 118 026

## Description

L'invention a pour objet un procédé de fabrication par assemblage d'une structure rigide au départ de panneaux découpés carrés ou rectangulaires et de châssis en forme dé cadre, en forme d'échelles ou en forme de grilles (c'est à dire d'échelles à montants jointifs mono-bloc ou réunis par tout moyen mécanique).

L'objet se particularise par les avantages essentiels qui suivent: La structure selon l'invention est assemblable à mains nues c'est à dire que l'opérateur travaille sans outil, sans clous, sans colle, sans vis ou autre accessoire de quincaillerie; l'assemblage est très rapide et la structure finale présente une rigidité marquée au tangage et/ou roulis.Sur sol droit, la structure selon l'invention est directement et parfaitement d'aplomb tout en présentant une grande économie de matière par rapport à son volume final. De ce fait la structure selon l'invention est légère Les matériaux de base nécessaires à la réalisation de la structure selon l'invention sont plats et, par conséquent leur conditionnement et leur transport sont très faciles. Par ailleurs, les matériaux en question se trouvent de façon courante dans le commmerce sous forme de panneaux plats, en divers matériaux tels que bois, carton, métal, polystyrène expansé, plexi, verre. etc... A l'état final, lorsqu'elle a été assemblée, la structure permet aisément de dissimuler dans le réseau de ses montants un ensemble de cables. fils, tuyaux et accessoires d'éclairage.Chaque structure est, en fait une entité indépendante très aisément jumelable à une autre identique et extensible par module dans toutes les directions. D'autre part, la fabrication proprement dite des châssis et des carrés ou rectangles découpés qui sont les éléments structurels de base, ne requiert ni main d'oeuvre abondante,ni outillage compliqué, car ils résultent, en majeure partie d'une simple opération de sciage, d'emporte-pièce ou de moulage. Après assemblage, le démontage de la structure est particulièrement aisé, sans altération majeure de ses constituants.

L'état de la technique en matière d'assemblage de matériaux courants et facilement transformables comme on l'a vu ci-dessus, en vue d'obtenir une structure rendue rigide par coïnçage, c'est- à dire sans utilisation d'outils ou d'autres accessoires, ne révèle aucun procédé permettant d'aboutir en un temps aussi rapide à la réalisation d'une structure autoportante présentant une telle rigidité.

A titre illustratif, on citera le document FR-A-2629756 (LE GOURRIERC) qui décrit un procédé de fabrication de meubles en matériaux semi-rigides plats. La fabrication de tels meubles ou structures requiert une découpe, l'assemblage est rapide mais du collage est nécessaire. Dans le type d'assemblage selon le document évoqué ci-dessus, on met en oeuvre différentes opérations de découpe à dimension de bandes de matériau d'épaisseur déterminée, de pliage de bandes ainsi découpées, pour l'obtention de formes adéquates correspondant au meuble à réaliser.

Le matériau semi-rigide peut être un carton ondulé, notamment pour la confection de structures de petit format, un matériau plastique tel que le polyéthylène, le polystyrène expansé, etc., un matériau composite, du bois déroulé, un métal tel que l'aluminium à structure en nids d'abeille, etc.

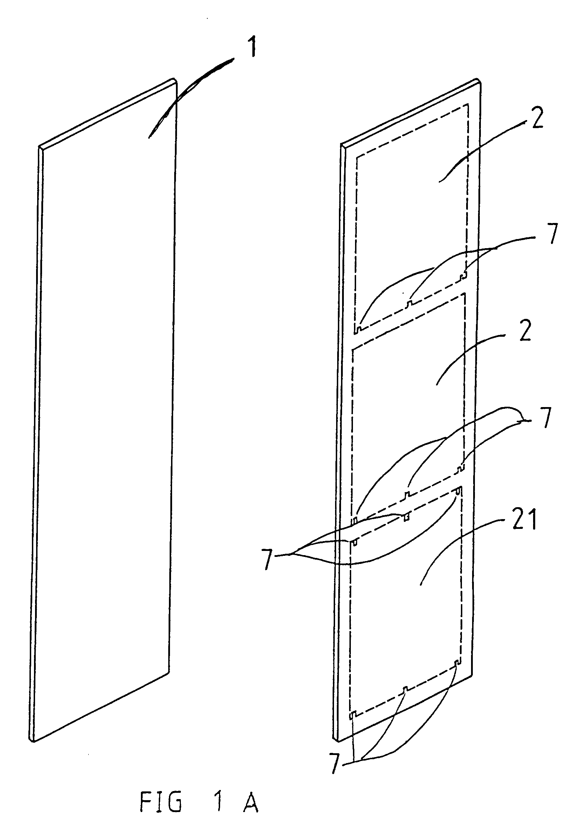

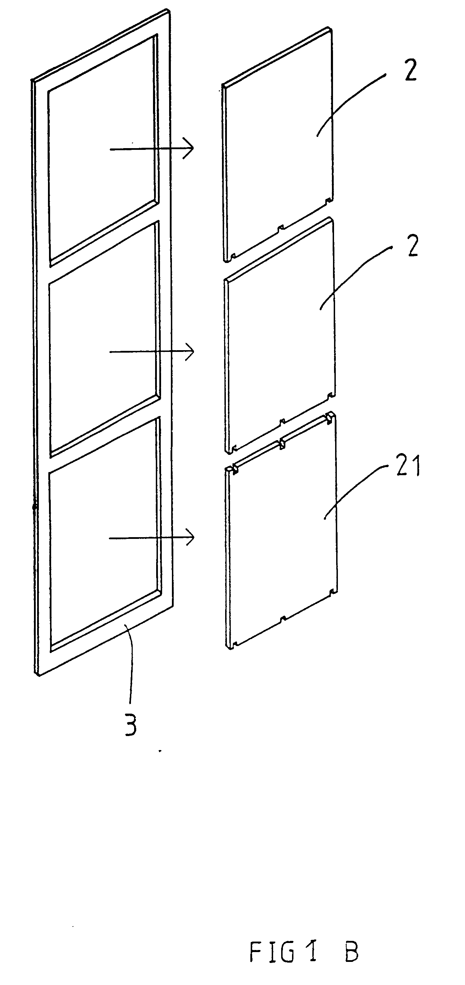

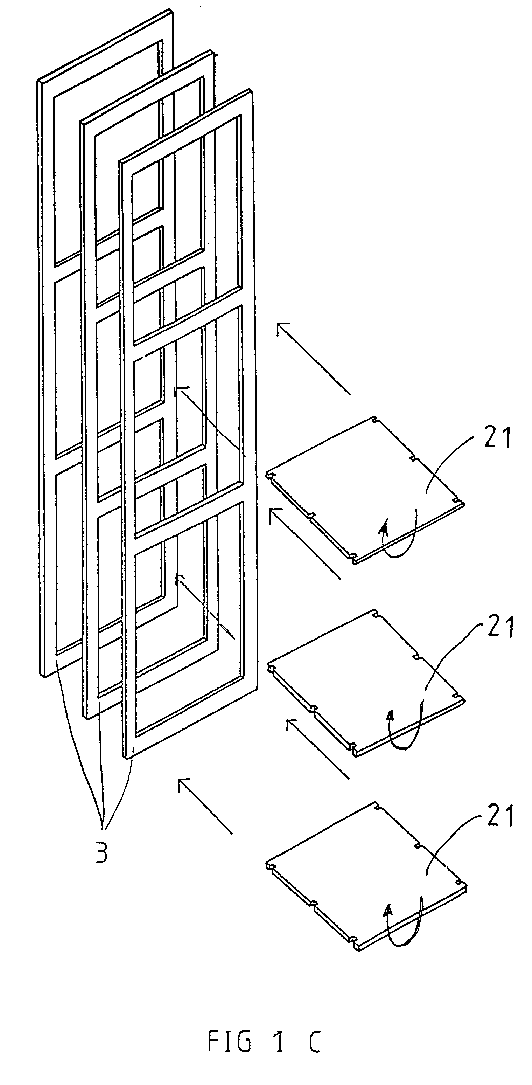

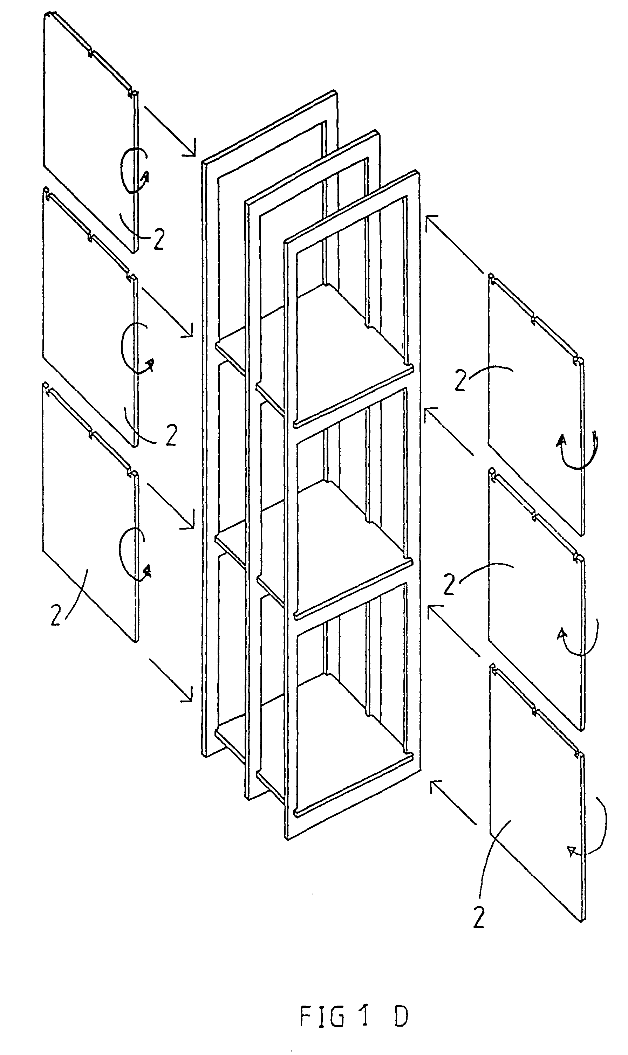

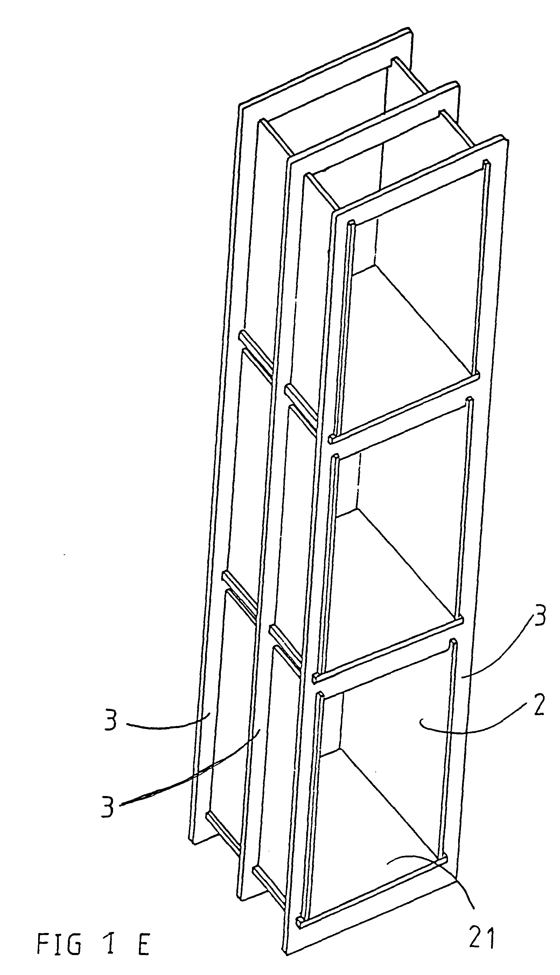

L'état de la technique est d'autre part également décrit par le document US-A-4182244 qui a pour objet un ensemble cent le montage est formé de quatre barres de renforcement auquelless sont fixés perpendiculairement quatre panneaux carrés (Fig. 1 du document).

On y décrit un ensemble modulaire formé, de préférence, de carton très épais. Il inclut une pluralité de panneaux qui sont adaptés pour s'emboiter les uns au-dessus des autres et chaque panneau comprend un plateau rectangulaire horizontal.

Le matériel nécessaire est, ici, multiple et divers Les inconvénients majeures de ces structures sont la possibilité de fluage global de l'ensemble et/ou de flambage sous l'effet du poids et/ou des sollicitations dues aux chocs auquels est soumise la structure d'assemblage par rangement.

La présente invention a pour objet un procédé de fabrication plus simple d'une structure rigide avec des panneaux pleins ou même grillagés dans lesquels sont découpées des fenêtres carrées ou rectangulaires.

Le procédé est caractérisé en ce qu'un cube dont la surface est limitée à 2,3 ou 4 faces ,et issu ou non, du découpage ou évidemment des différents panneaux, a pour fonction de maintenir verticaux les deux ou plusieurs chassis, d'une part par coïncement des dits panneaux et d'autre part, par rigidité intrinsèque des panneaux.

L'invention a plus particulièrement pour objet un procédé d'assemblage d'une structure rigide tridimensionnelle démontable ou non démontable alvéolée à partir d'au moins deux châssis sous la forme de cadres, échelles ou grilles, à montant jointifs ou monoblocs ou réunis par tout moyen mécanique et des échelons , et d'au moins deux panneaux rectangulaires découpés, pouvant résulter d'une opération de sciage, emporte-pièce ou moulage, latéraux et/ou de plancher et/ou de toit, caractérisé en ce que - l'assemblage entre châssis et panneaux se fait par l'introduction inclinée et par coincement à force desdits panneaux, dans les vides desdits châssis, perpendiculairement au plan desdits châssis
et en ce que le coincement des panneaux - et par conséquent la rigidification de toute la structure - résulte du redressement forcé de ces mêmes panneaux jusqu'à ce que leur tranche verticale soit parallèle et tangente aux montants des châssis , la hauteur desdits panneaux étant légèrement supérieure à l'intervalle séparant deux échelons, que cet intervalle soit défini par
a) la distance séparant deux échelons
b) la distance effective séparant un échelon et l'épaisseur d'un panneau de plancher ou enfin
c) la distance effective séparant le panneau de plancher et un panneau de toit
et enfin en ce que la distance entre les châssis de la structure est fonction du choix de l'emplacement d'encoches et/ou de gorges ménagées en haut et/ou en bas et/ou éventuellement le long des panneaux,
la profondeur totale de ladite structure étant égale à l'écartement entre les châssis additionné à la plus grande bande de saillie des panneaux dépassant à l'avant et à l'arrière des montants et des échelons des châssis.

Selon un mode préféré de l'invention, le procédé se caractérise en outre en ce qu'au moins un des panneaux a été découpé dans un ou plusieurs panneaux de départ pleins, ce ou ces derniers formant après la découpe un ou des châssis.

L'invention a également pour objet un structure rigide tridimensionnelle composée d'au moins deux châssis plats parallèles comprenant un ou des évidements formant échelons et montants, et de deux types de panneaux découpés, et résultant d'une opération de sciage, ou de moulage, disposés perpendiculairement au plan des chassis,
caractérisé en ce que les panneaux latéraux sont placés tangents aux montants d'au moins deux châssis et sont munis d'encoches et/ou de gorges enserrant une tranche respectivement d'un échelon et/ou d'un montant des châssis, lesdits panneaux latéraux reposant sur des panneaux de plancher, perpendiculaires aux montants des châssis, et munis d'encoches et/ou de gorges enserrant une tranche des châssis.

On comprendra que l'intérêt essentiel de l'invention est de mettre à la disposition du particulier possédant peu d'outils un réel procédé d'érection d'une structure à buts divers. Plus spécifiquement, la structure assemblée selon le procédé de la présente invention a également pour originalité qu'une seule opération permet la fabrication aisée et simultanée ,des éléments nécessaires :chassis et des panneaux découpés associés sans déchet de matière , par emboutissage, découpe LASER et analogues, le matériau de départ essentiel à la fabrication de la structure étant, en conséquence, deux ou trois panneaux de départ identiques dont la largeur et la longueur déterminent la largeur et la hauteur de la structure.

La diversité de réalisation des structures est remarquable du fait que le nombre de panneaux découpés et le nombre de chassis peuvent être conjugués.

La conjugaison des éléments se fait essentiellement en suivant une manière fondamentales de travail telles que l'une des manières suivantes:
2 panneaux découpés pour chaque intervalle entre les échelons du chassis et deux ou plusieurs chassis
3 panneaux découpés pour chaque intervalle entre les échelons du châssis et deux ou plusieurs chassis
4 panneaux découpés pour chaque intervalle entre les échelons du chassis et deux ou plusieurs châssis

Les différentes façons de conjuguer les pannneaux découpée et les chassis sont ici donnés à titre exmplatif et non limitatif.

On concevra cependant que la structure assemblée selon la première façon de conjuguer sert à réaliser une cloison ou un mur à claire-voie, ou l'âme de ces deux entités, de même qu'à réaliser une poutre dans les espaces de laquelle, une croix centrale peut être introduite dans le but d'augmenter la résistance mécanique.

De même il est clair que la structure assemblée selon la deuxième façon de conjuguer sert à réaliser une cloison ou un mur à claire-voie, ou l'âme de ces deux entités de même qu'à réaliser une poutre, avec ou sans croix centrale de renfort, une bibliothèque ou un meuble de rangement pour lequel des côtés, un fond, un toit et des portes à glissières ou à charnières peuvent être ajoutées, et enfin à réa liser, à l'aide d'un couple de chassis-cadre une caisse par adjonction de deux cotés insérés le long de quatre rainures.

Il est aissi concevable que la structure assemblée et obtenue selon la troisième façon de conjuguer les panneaux découpés et les chassis sert à réaliser une cloison ou un mur à claire-voie ou l'âme de ces deux entités de même qu'à réaliser une poutre avec ou sans croix centrale de renfort, une bibliothèque ou un meuble de rangement pour lequel des côtés, un fond, un toit, et des portes à glissières, à charnières ou à pivot , peuvent être adjoints et sert aussi finalement, après adjonction de deux ou trois côtés d'étanchéïté et de réglettes de verrouilllage, à réaliser un coffrage démoulable pour béton ou tout autre matérau formable qui laisse, après démoulage, la forme tridimensionnele de la structure originelle réduite de l'épaisseur des chassis de l'épaisseur des panneaux découpés et de la portion des bandes de saillie dépassant des montants et des échelons du chassis.

On se rend parfaitement compte que la structure selon l'invention peut être rendue définitive et non démontable par opérations de collage, vissage, clouage ou par toute autre opération mécanique réalisée sur ses différents constituants.

D'autres buts , avantages et caractéristiques apparaîtront à la lecture de la description d'un mode possible de réalisation de la présente invention donné à titre indicatif et non limitatif, sur base des dessins annexés dans lesquel, les éléments désignant les mêmes réalités constructives sont désignés partout par la même lettre ou le même chiffre de référence pour des raisons de simplicité:
- Les figures 1a à 1e sont l'illustration des phases de fabrication simultanée des chassis et des panneaux découpés associés, dans le cas non limitatif où l'on emploie trois châssis associés à trois panneaux découpés munis d'encoches .
- Les figures 2a à 2e sont d'une part, une illustration des phases de fabrication d'une poutre, d'un mur à claire-voie ou d'une cloison à partir de deux châssis associés à deux panneaux découpés munis d'encoches et de rainures. On illustre également (fig 2f,2g), l'introduction d'une croix de renforcement dans les structures ainsi fabriquées (fig.2f) et du jumelage (fig.2g) desdites structures.
- Les figures 3a à 3r représentent une bibliothèque (Fig. 3a à 3h) et ou une caisse (fig 3i à 3r) en détaillant de façon très explicite les différents stades d'assemblage de ces éléments respectifs.
- Les figures 4a à 4i représentent l'essentiel des phases d'assemblage d'un meuble de rangement (fig.4a à 4i) et d'un coffrage à béton.(fig 4a à 4g), les éléments de départ étant quatre panneaux découpés munis d'encoches et de rainures et de deux châssis.

Sur la figure 1a, on a représenté sucessivement le panneau 1 originel. Comme la chose est claire à la figure 1b, ce panneau est évidé en deux panneaux découpés 2 munis chacun de trois encoches 7, et en un plancher 21 muni de six encoches. Le panneau est, en fait découpé de façon à réaliser des rectangles très peu géométriquements différents de réels carrés. La longueur des rectangles ménagés est précisément égale à la longueur d'un réel carré augmentée de deux fois la profondeur d'une encoche 7 du panneau de plancher 21. La raison pour laquelle on peut ménager des encoches dans le plancher 21 réside dans le fait que lors du placement des planchers dans les chassis 3, ils sont placés de manière que leur longueurs soient orientées dans la direction perpendiculaire à la direction de cette longueur lors de sa découpe. La profondeur des encoches 7 supérieures des panneaux de côté est égale à l'épaisseur du panneau de plancher diminuée d'une quantité infime permettant le coïnçage du panneau latéral dans l'intervalle constitué par la surface supérieure du plancher et l'échelon du chassis 3.

La figure 1b montre très bien que
le panneau 1 dissocié des panneaux découpés 2 et du plancher 21 donne le châssis 3. Cette opération rapide d'évidement en trois panneaux découpés munis d'encoches 7 est répétée trois fois à partir de trois panneaux 1 distincts.

Les trois chassis résultants 3 sont disposés parrallèlement et l'on introduit les trois panneaux de planchers 21 de façon à ce que leur longueur soit face à la largeur de l'évidement pratiqué dans le panneau 1. En fin d'opération, chaque montant de chaque châssis 3 est enserrés à l'aide des encoches 7 comme on peut le voir très clairement à la fig 1d. A la figure 1d, on voit que , les trois chassis étant pourvus de leurs planchers 21, on introduit les panneaux découpés 2 à gauche et à droite, en les maintenant inclinés, on pose les encoches 7 dans les échelons supérieurs des trois chassis et on les redresse jusqu'à les rendre tangents au montants des châssis 3.

On obtient de la sorte le coïncement primordial voulu pour la stabilité de la structure toute entière.

On obtient finalement une configuration illustrée à la figure 1e.

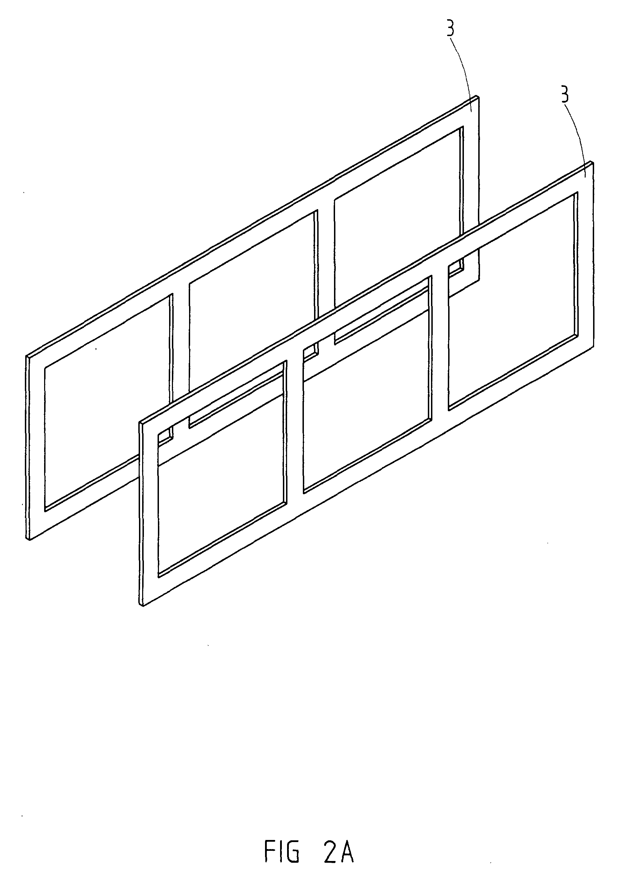

A la figure 2a, une réalisation d'une poutre ou d'une cloison (jumelage des poutres redressées) est illustrée. On fait à nouveau usage de chassis (dans ce cas ci deux chassis). Dans les modes de réalisation décrits ci -après, on peut procéder selon la figure 1 ou on peut assembler les chassis et découper séparément les panneaux. A la figure 2a, on a représenté des rainures 61 qui sont associées aux encoches 7 de même que dans toutes les figures ultérieures. Il est à remarquer que les rainures 61 peuvent être associées aux encoches 7 aussi bien dans la figure 1 que dans les autres figures.

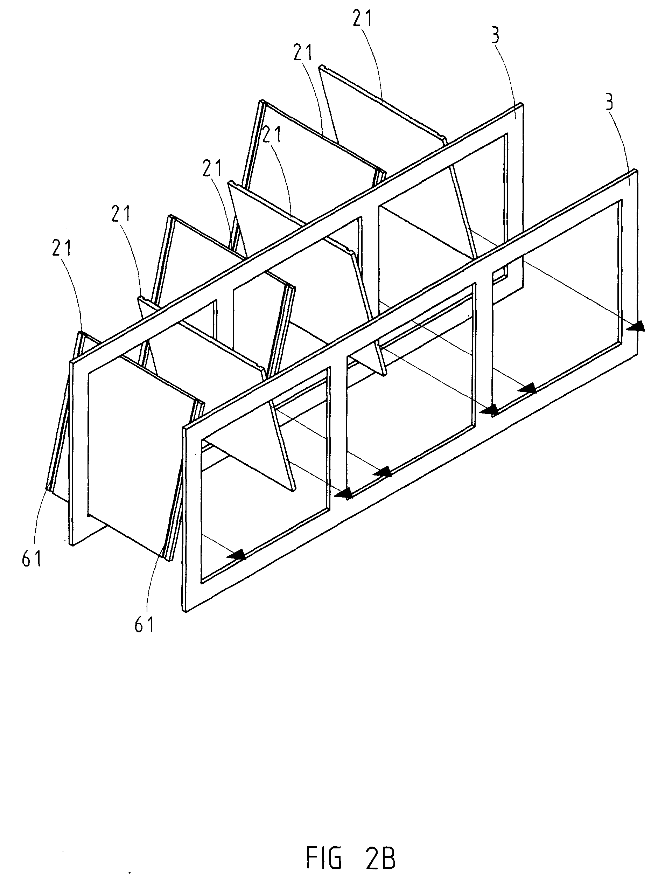

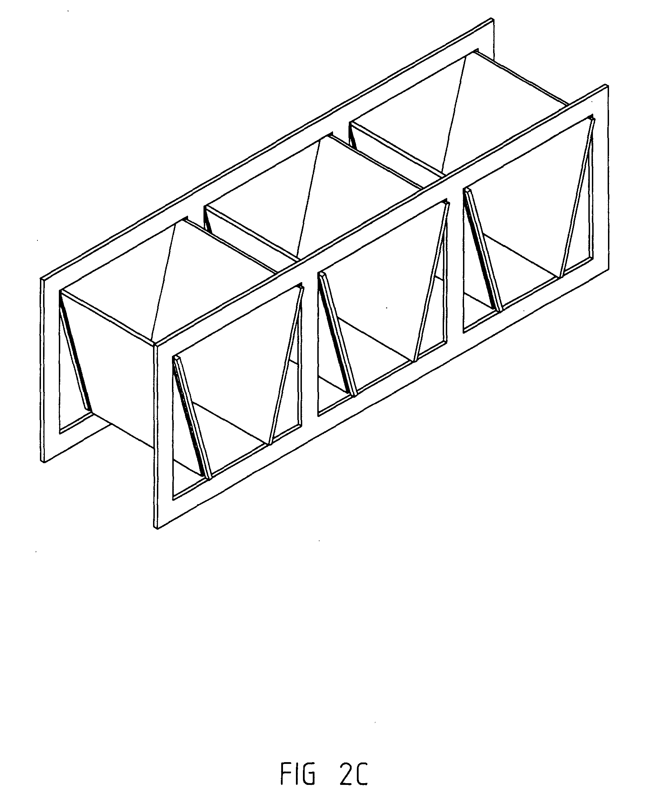

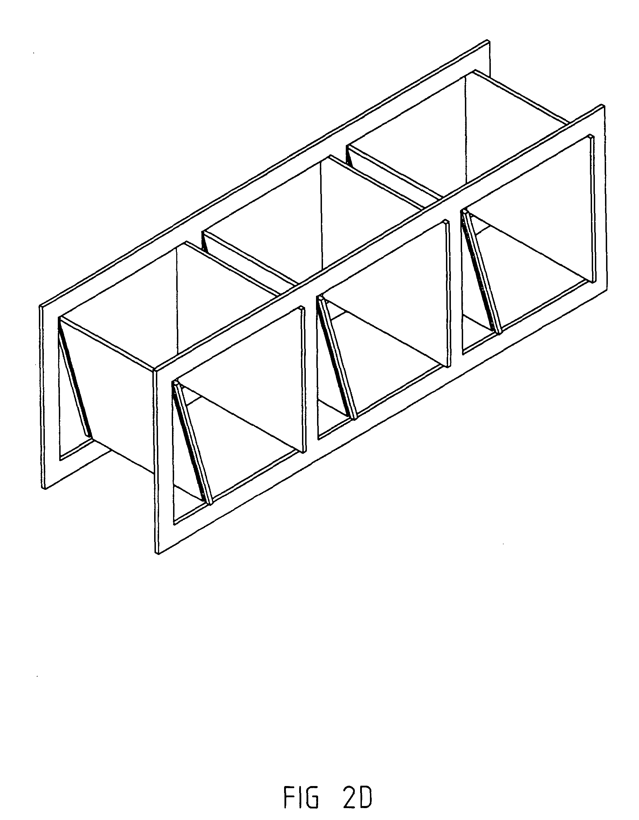

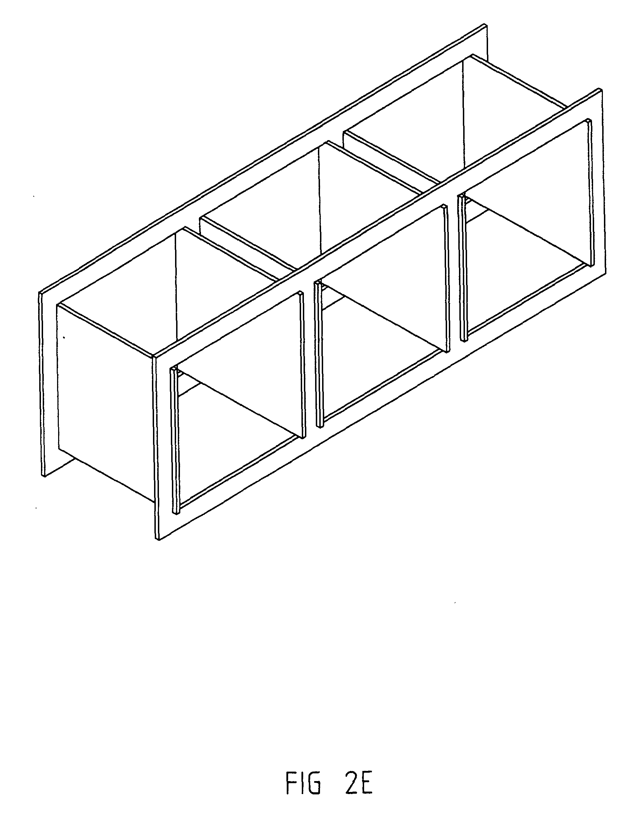

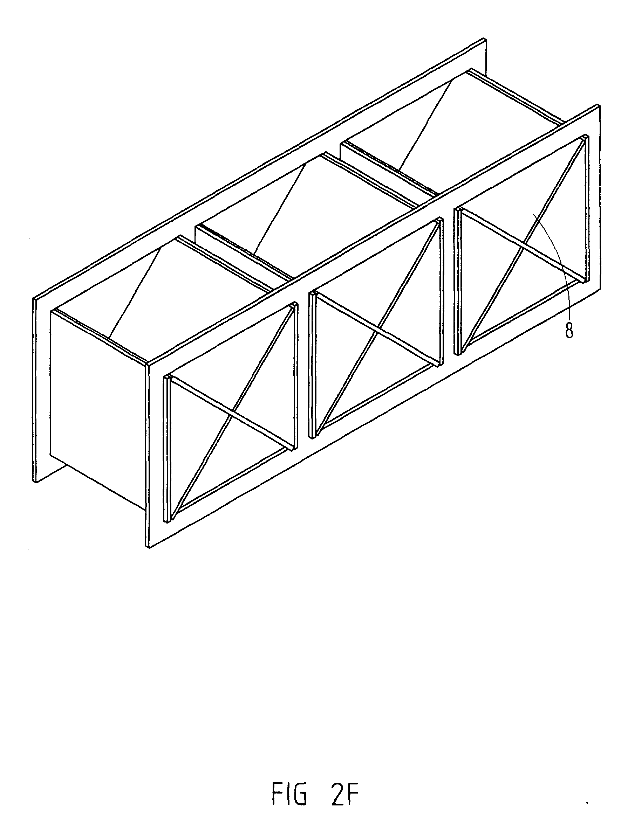

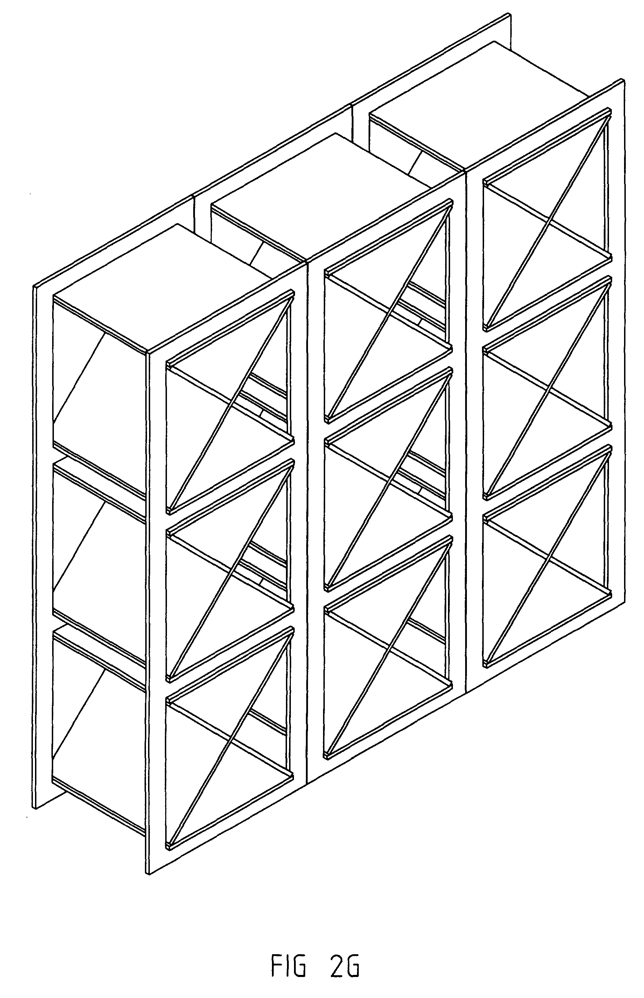

Comme on peut le voir, les chassis (fig 2a) sont placés en parallèle l'un à l'autre et à l'horizontale. Pour chaque ouverture de chassis 3 on introduit (fig 2b) deux panneaux planchers 21 dont les encoches 7 sont associées à des rainures 61 menagées dans leurs épaisseurs. La figure 2c illustre la positionnement des encoches 7 dans les montants 9. Les rainures sont situées au bord des échelons 10 des chassis 3. A la figure 2d est représenté le redressement d'un des panneaux 21 qui se coïnce entre les montants 9 du chassis 3 et dont les rainures 61 enserrent les échelons 10 du chassis 3. La figure 2e est l'illustration de la même opération pour l'autre panneau 21. Dans la figure 2f une croix de renforcement 8 est mise en place perpendiculairement au chassis 3. Elle se trouve ainsi dans les vides de la structure construite selon la figure 2e. La figure 2g illustre le redressement de la structure selon la figure 2f et le jumelage de cette structure avec deux autres identiques.

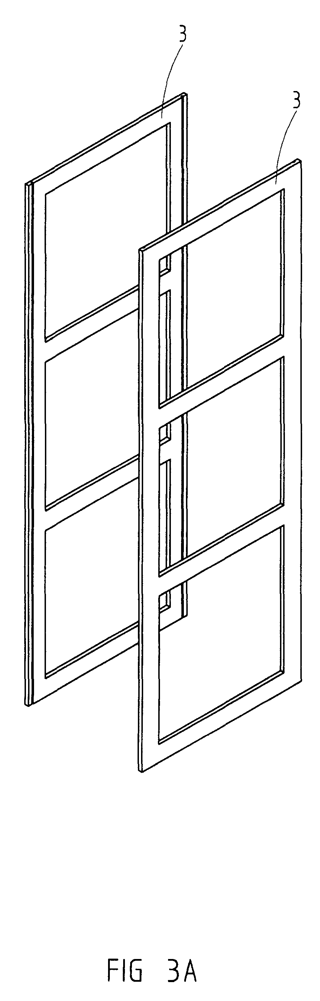

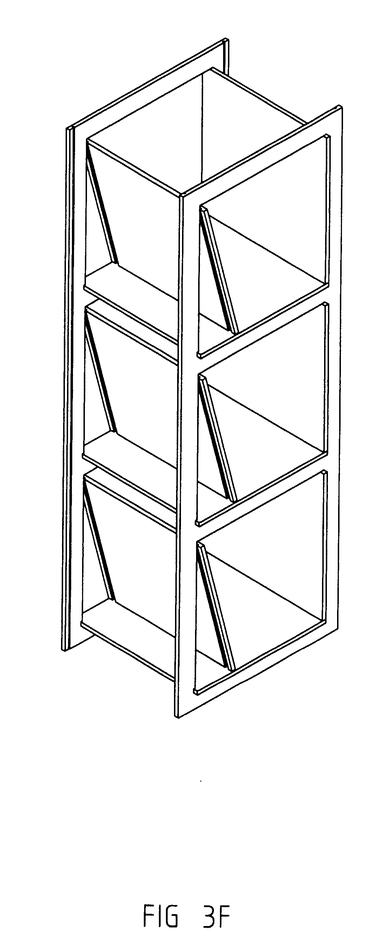

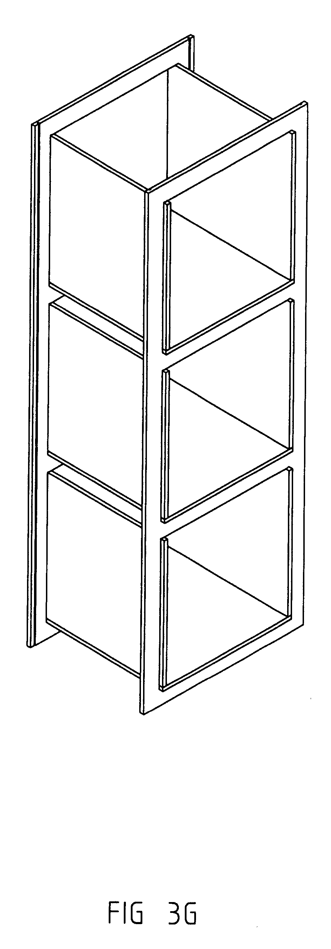

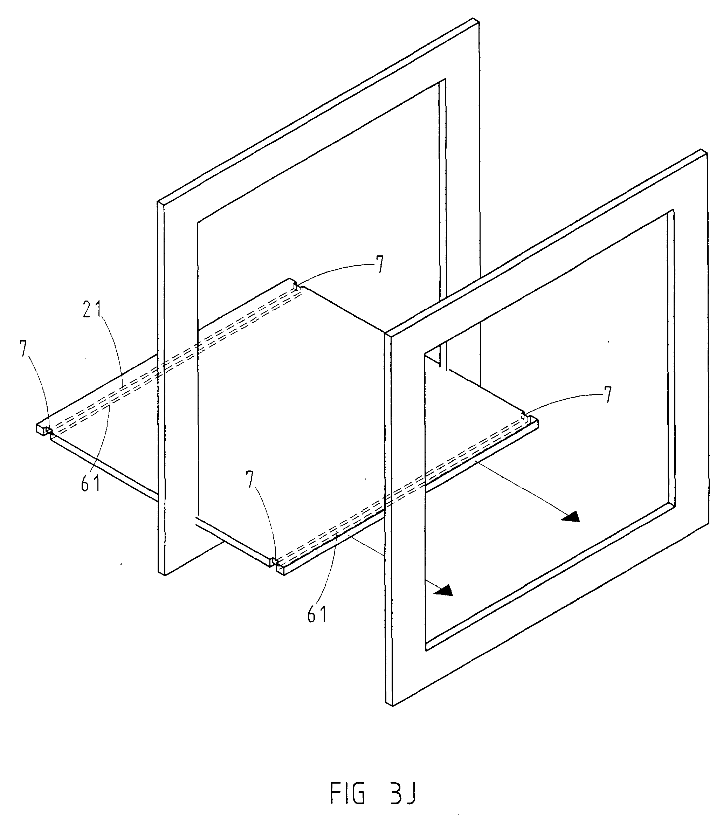

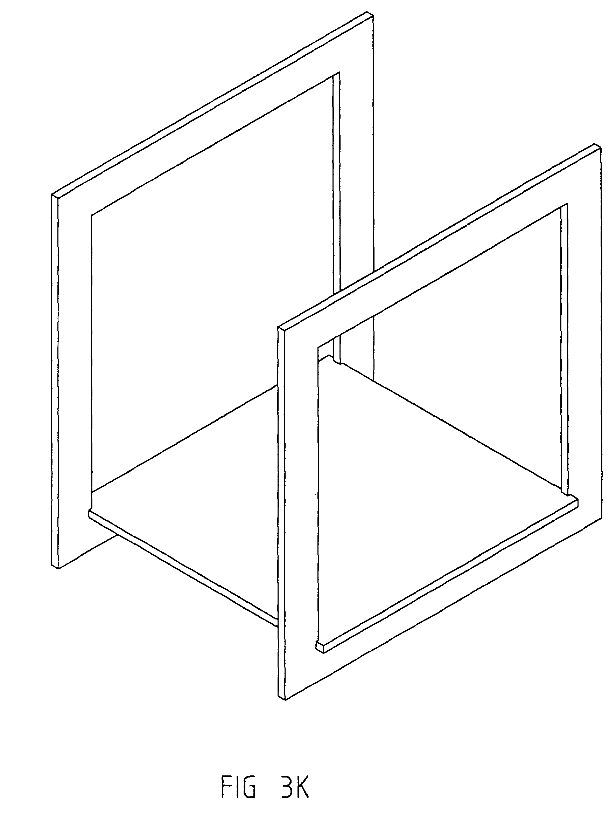

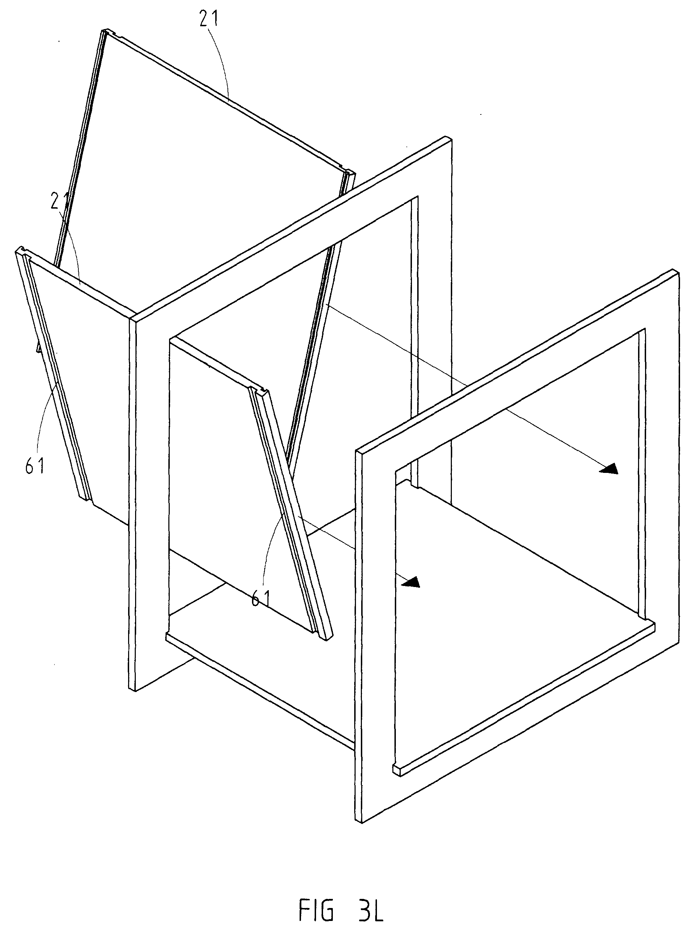

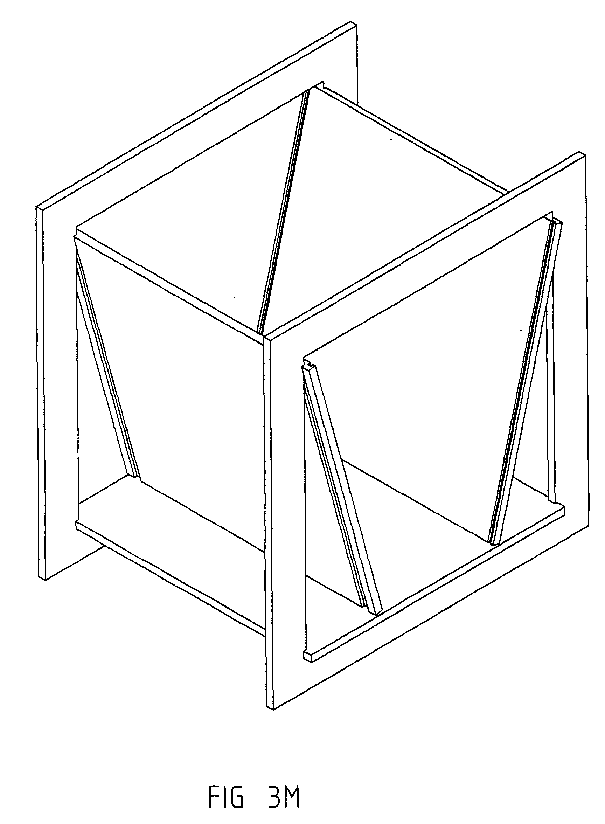

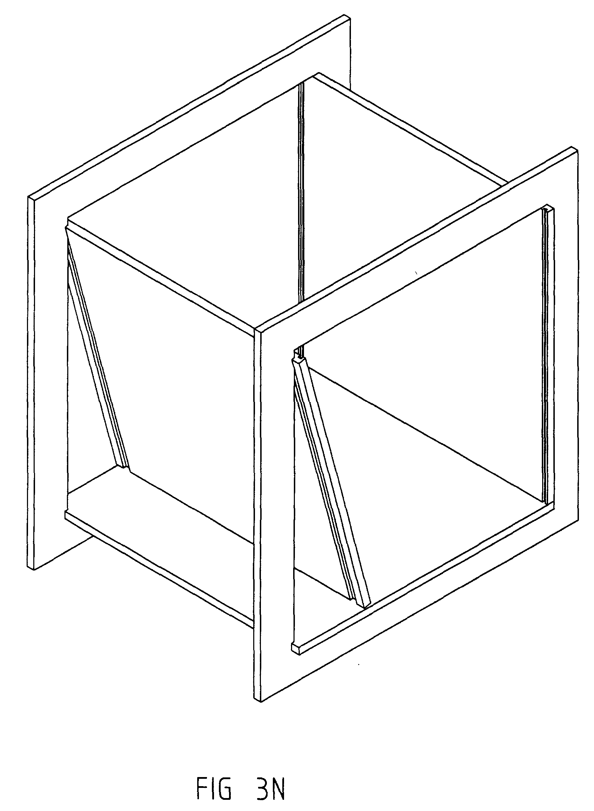

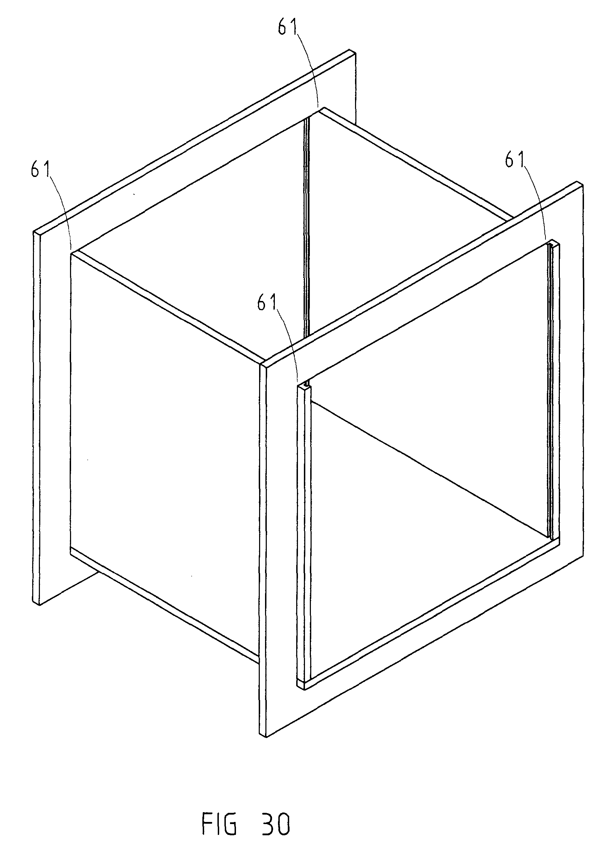

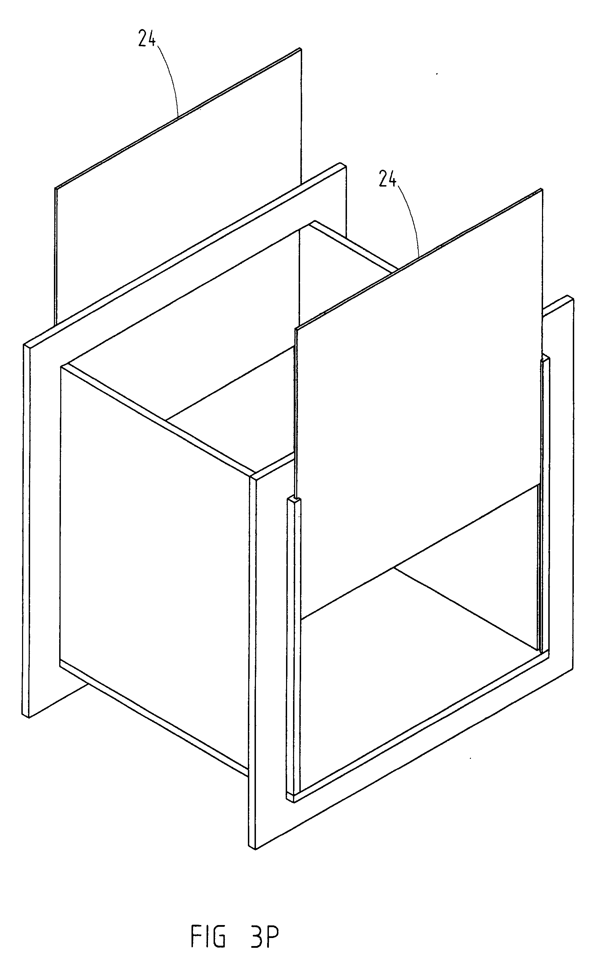

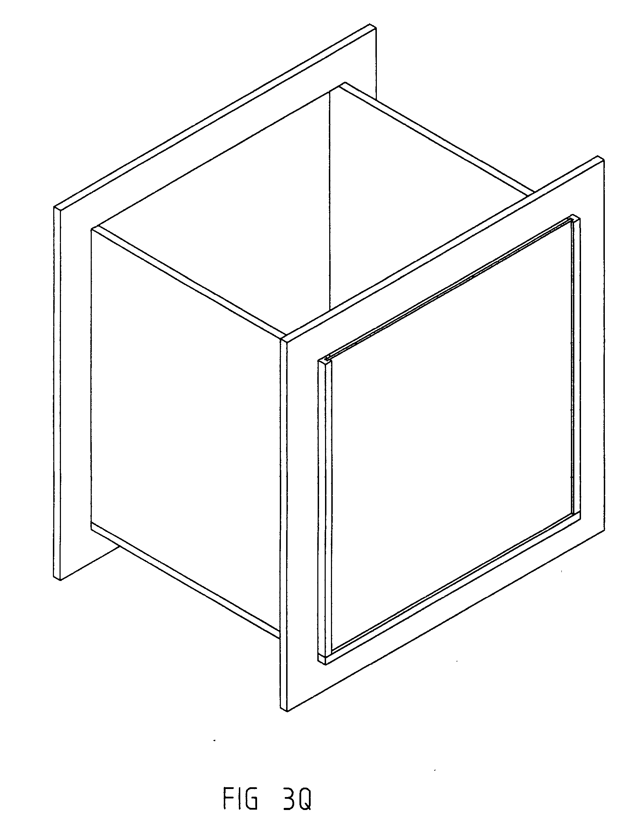

Dans la figure 3a sont représentés deux chassis 3 placés en parrallèle.

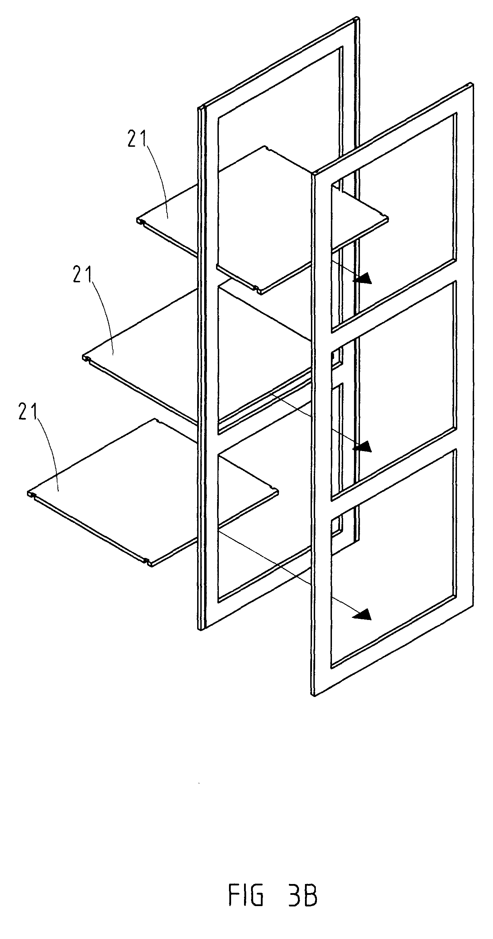

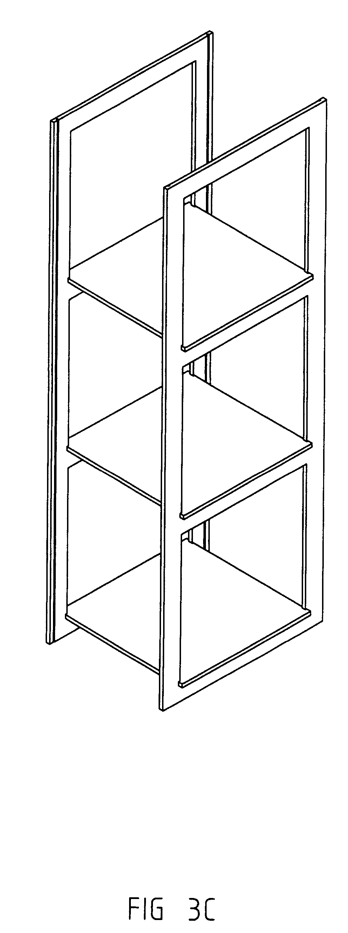

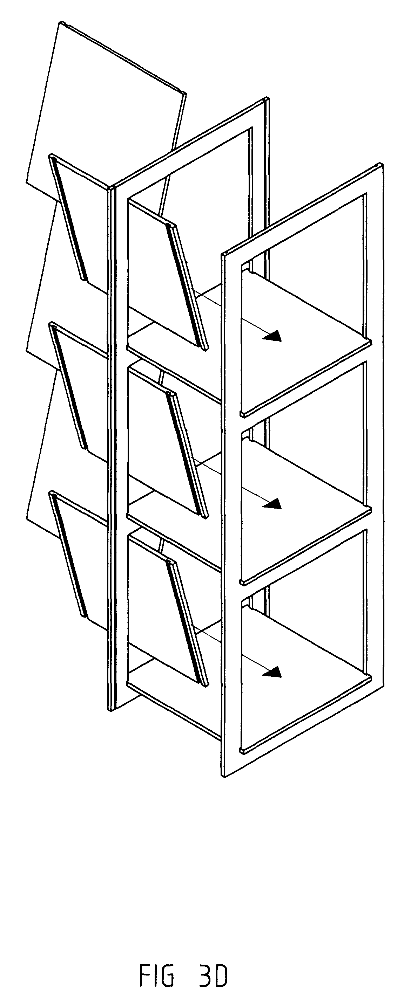

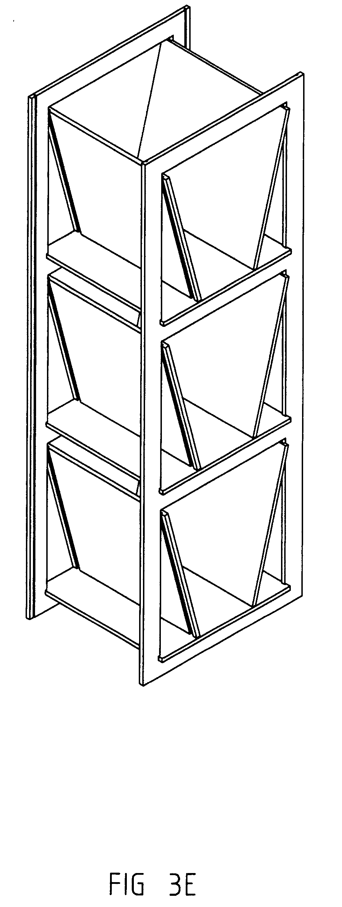

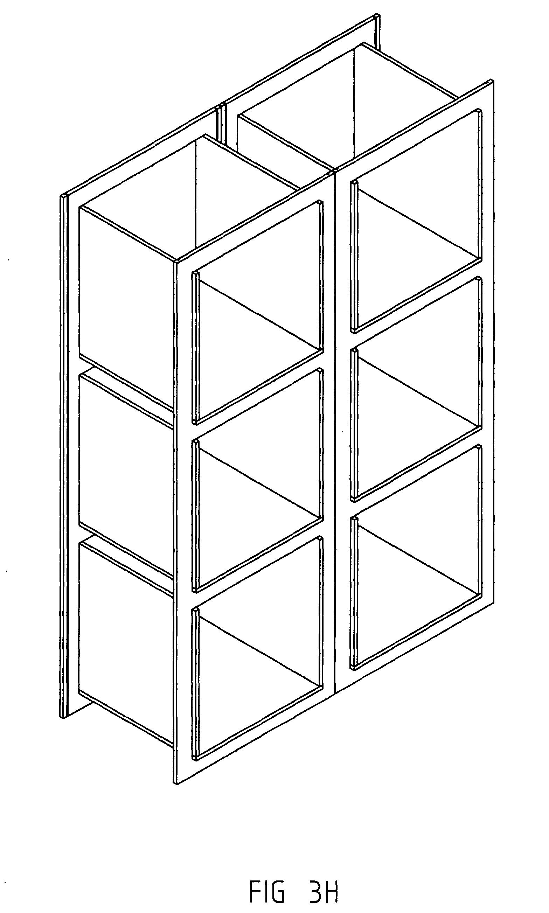

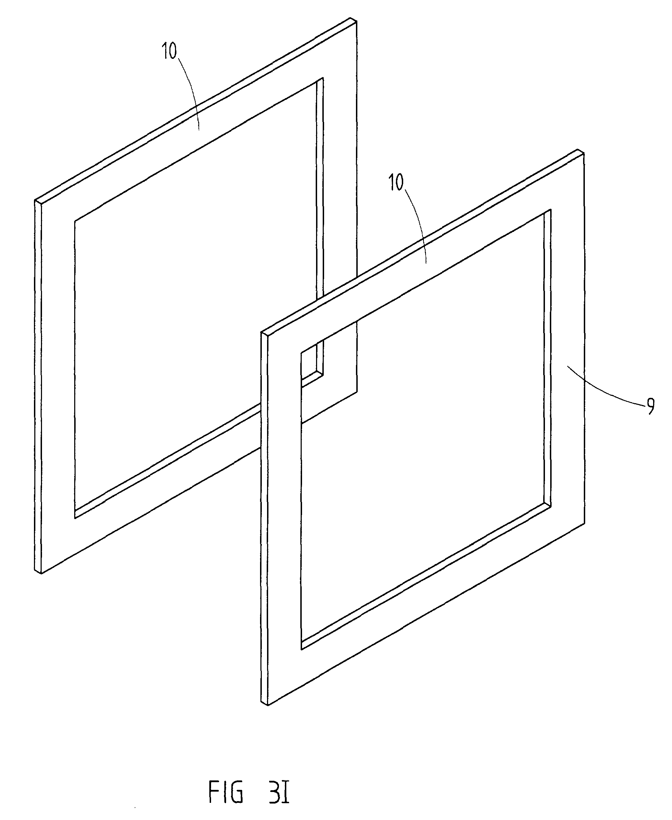

A la figure 3b ,on introduit des planchers 21 munis de rainures 61 et d'encoches 7. Le positionnement exacts des panneaux 21 est repris à la figure 3c tandis que la figure 3d montre l'introduction de deux panneaux 21 placés latéralement , par intervalle, entre les échelons 10. Ensuite, à la figure 3e, les encoches 7 supérieures enserrent les échelons 10 de la structure, les encoches inférieures reposant sur le panneau plancher 21. Les rainures 61 sent, en conséquence, en regard du montant 9. Dans la figure 2f, un des panneaux latéraux 21 est redressé de manière à être rendu tangent au montant 9 du châssis 3, les rainures servant de logement aux montants 9 du châssis 3. La figure 3g illustre la même opération pour l'autre panneau latéral 21, ce qui termine l'érection de la structure. La figure 3h représente deux structures identiques construites selon ce qui vient d'être décrit.

Les figures 3i à 3o sont l'illustration d'une séquence d'opérations exactement identique à celle des figures 3a à 3h mais elle est relative à la fabrication d'une caisse.

Pour ce cas, les panneaux latéraux 21 sont munis de deux rainures chacun de façon à ce qu'un panneau latéral de caisse 24 soit introduit par glissement le long des rainures pour fermer la caisse ( voir fig.3p pour le glissement et figure 3q pour la caisse terminée.) La figure 3r est l'illustration de trois caisses empilées.

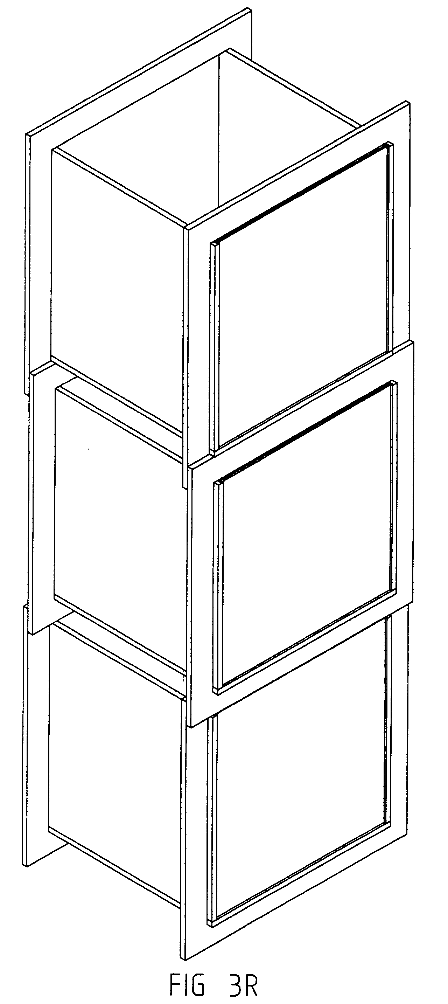

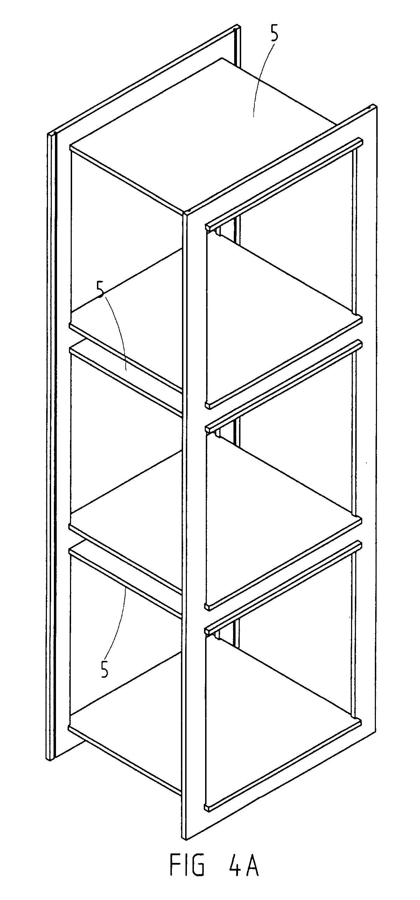

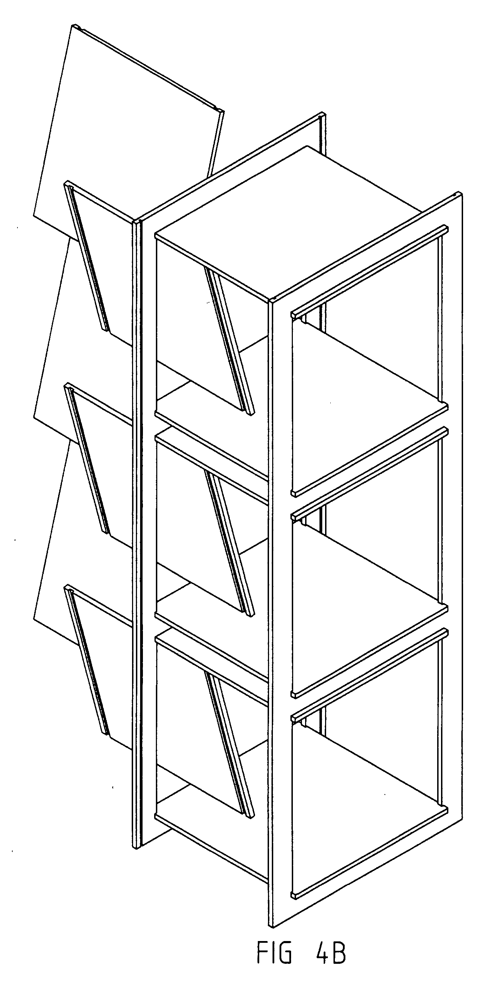

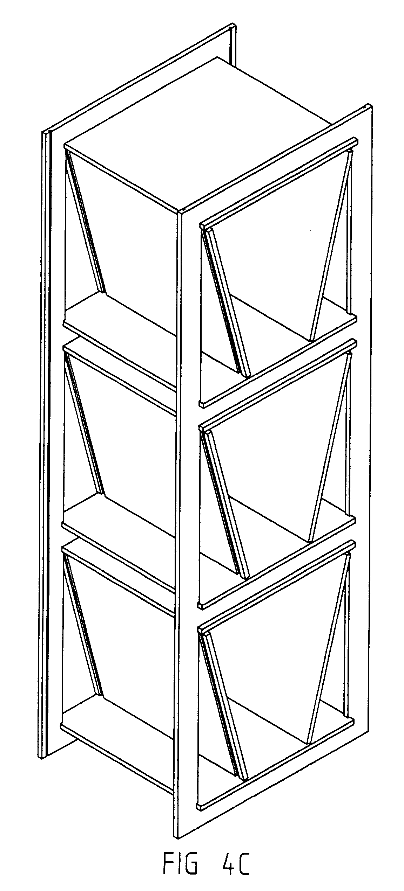

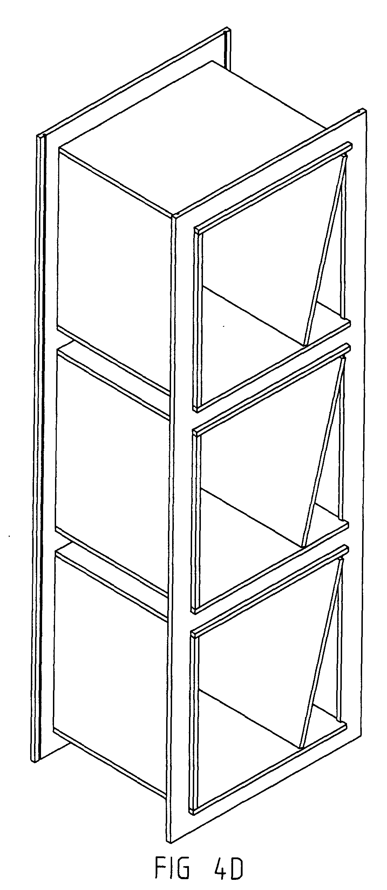

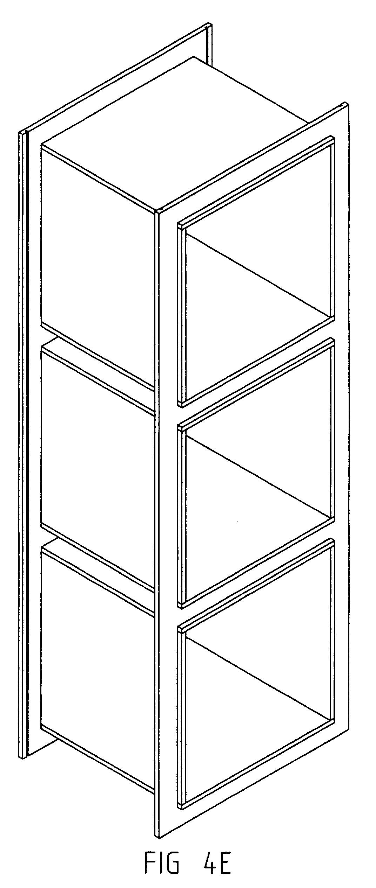

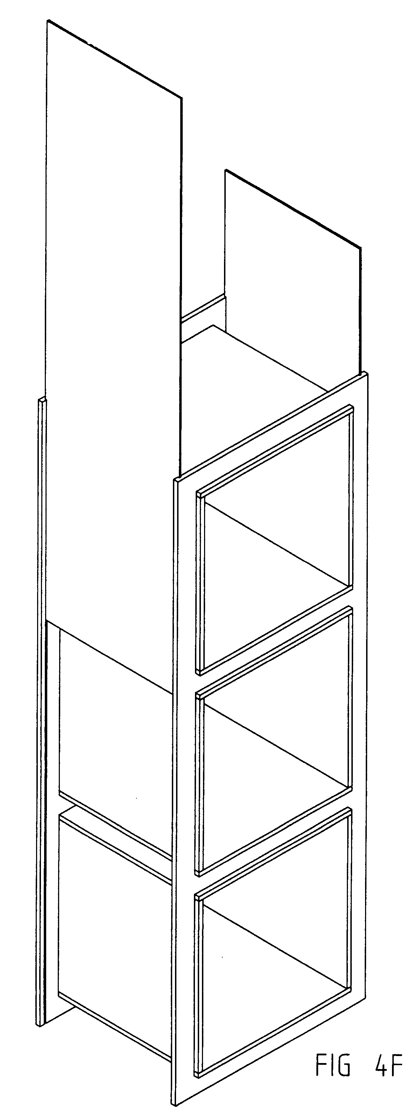

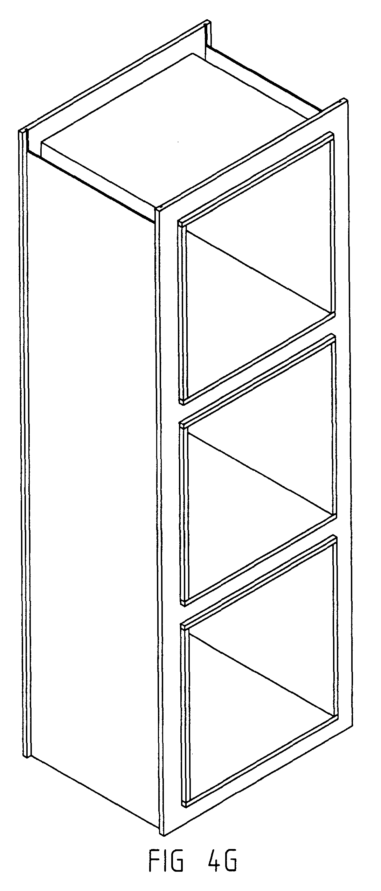

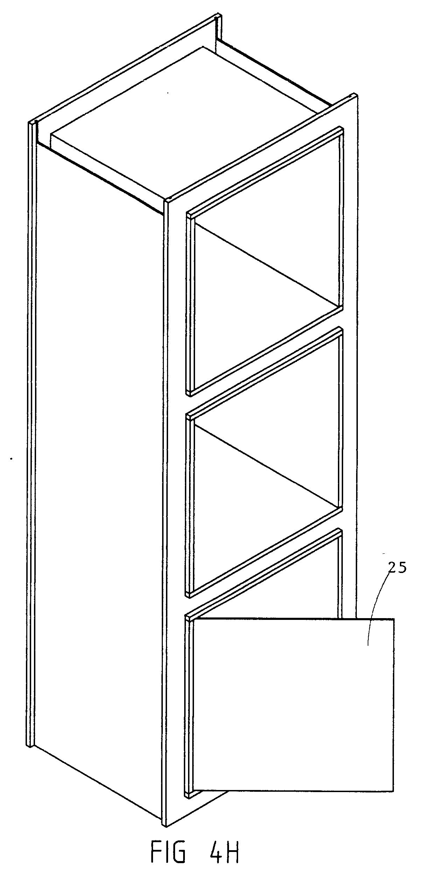

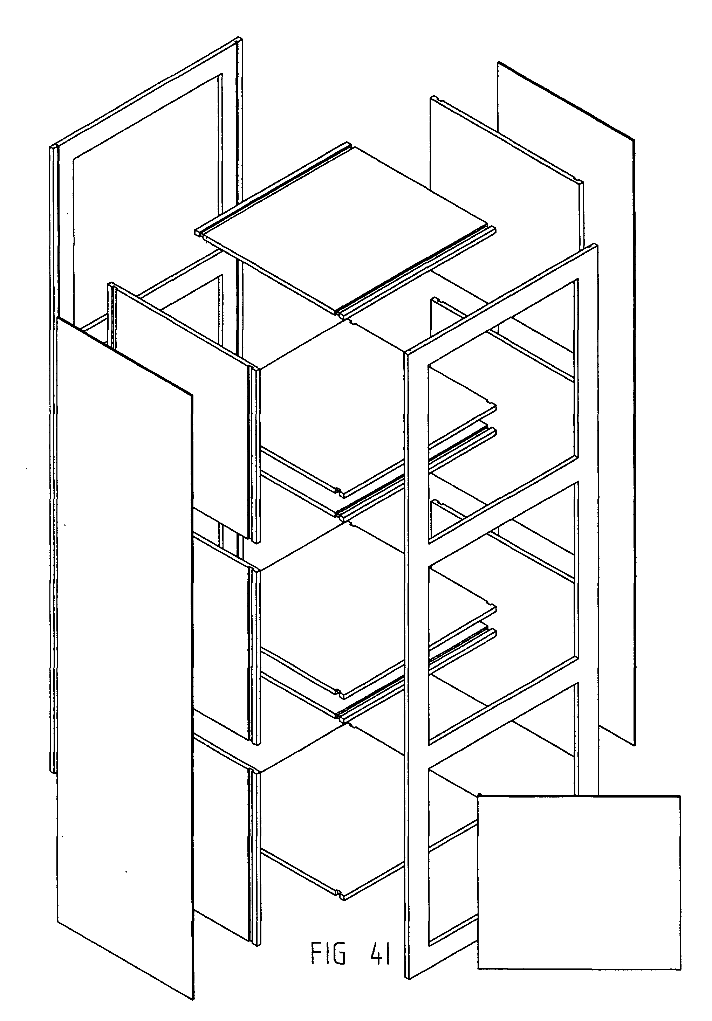

Les figures 4a à 4i illustrent à la fois un meuble de rangement avec une porte et deux côtés de finition et un coffrage à béton. Par rapport aux structures décrites plus haut, un meuble de rangement et/ou un coffrage à béton se différentient par la présence d'une porte 25 (Figure 4h et figure 4i qui est une vue éclatée), d'un toit et de côtés d'étanchéïté (cas du coffrage à béton) ou de finition ( cas du meuble de rangement). Pour le meuble de rangement, la surface inférieure du toit et la surface supérieure du plancher peuvent être percées chacune d'un trou indispensable au montage correct d'une porte à pivots. A part cette caractéristique spécifique au meuble de rangement, le principe d'assemblage est identique à celui des trois types de structures donnés à titre non limitatif sur base des figures 1 à 3 ,les exceptions étant que les panneaux latéraux se coïncent entre un plancher 21 et un toit 5 et que l'on adjoint deux côtés 23 ce qui permet, dans le cas d'un coffrage reposant sur le sol, et remplissable par le dessus de béton ou de matière formable, de réaliser la forme tridimensionnelle de la structure réduite de l'épaisseur des châssis 3. de l'épaisseur des panneaux découpés 21, 2,23 et 5 et de la portion des bandes de saillie dépassant des montants 9 et des échelons 10 des chassis 3. La récupération possible du moule est évidemment un très grand avantage.

## Revendications

1. Procédé d'assemblage d'une structure rigide tridimensionnelle démontable ou non démontable alvéolée à partir d'au moins deux châssis (3) sous la forme de cadres, échelles ou grilles, à montant (9) jointifs ou monoblocs ou réunis par tout moyen mécanique et des échelons (10), et d'au moins deux panneaux rectangulaires (2, 21, 5) découpés, latéraux (2) et/ou de plancher (21) et/ou de toit (5), caractérisé en ce que
- l'assemblage entre châssis (3) et panneaux (2, 21, 5) se fait par l'introduction inclinée et par coincement à force desdits panneaux (2, 21, 5) , dans les vides desdits châssis (3), perpendiculairement au plan desdits châssis (3)
et en ce que le coincement des panneaux (2) - et par conséquent la rigidification de toute la structure - résulte du redressement forcé de ces mêmes panneaux jusqu'à ce que leur tranche verticale soit parallèle et tangente aux montants (9) des châssis (3),
la hauteur desdits panneaux (2) étant légèrement supérieure à l'intervalle séparant deux échelons (10), que cet intervalle soit défini par
a) la distance séparant deux échelons (10)
b) la distance effective séparant un échelon (10) et l'épaisseur d'un panneau de plancher (21) ou enfin
c) la distance effective séparant le panneau de plancher (21) et un panneau de toit (5)
et enfin en ce que la distance entre les châssis (3) de la structure est fonction du choix de l'emplacement d'encoches (7) et/ou de gorges (61) ménagées en haut et/ou en bas et/ou éventuellement le long des panneaux,
la profondeur totale de ladite, structure étant égale à l'écartement entre les châssis (3) additionné à la plus grande bande de saillie des panneaux dépassant à l'avant et à l'arrière des montants (9) et des échelons (10) des châssis (3).

2. Procédé selon la revendication 1 caractérisé en ce que les panneaux découpés (2, 21, 5) et/ou les châssis (3) résultent d'une opération de sciage ou de moulage.

3. Procédé selon la revendication 1 caractérisé en ce qu'en outre au moins un des panneaux (2, 21, 5) a été découpé dans un ou plusieurs panneaux (1) de départ pleins, ce ou ces derniers formant après la découpe un ou des châssis (3).

4. Procédé selon la revendication précédente caractérisé en ce que au moins un des panneaux découpés (21) est un rectangle dont la longueur est égale à la hauteur augmentée de deux fois la profondeur des encoches (7) prévues sur ledit panneau (21).

5. Procédé selon n'importe laquelle des revendications précédentes caractérisé en ce que les panneaux (2, 21, 5) sont des panneaux découpés par découpe laser ou à l'emporte-pièce.

6. Procédé selon n'importe laquelle des revendications précédentes caractérisé en ce que les panneaux proviennent d'une découpe, dans deux ou trois panneaux (1) de départ identiques, pour former des châssis (3), dont la largeur et la longueur déterminent la largeur et la hauteur de la structure.

7. Structure rigide tridimensionnelle composée d'au moins deux châssis (3) plats parallèles comprenant un ou des évidements formant échelons (10) et montants (9), et de deux types de panneaux (2, 21), découpés et résultant d'une opération de sciage ou de moulage, disposés perpendiculairement au plan des chassis, caractérisé en ce que le premier type de panneaux éant constitué par des panneaux latéraux (2) sont placés tangents aux montants (9) d'au moins deux châssis (3) et sont munis d'encoches et/ou de gorges (61) enserrant une tranche respectivement d'un échelon (10) *et/ou d'un montant* (9) des châssis (3), lesdits panneaux latéraux (2) reposant sur des panneaux (21) de plancher constituant le deuxieme type de panneaux, perpendiculaires aux montants des châssis (3), et munis d'encoches (7) et/ou de gorges (61) enserrant une tranche des châssis (3) .

8. Structure selon la revendication 7 caractérisé en ce qu'il y a deux panneaux (2, 21, 5) sciés, emboutis ou moulés, pour chaque intervalle entre les échelons (10) du châssis (3) et deux ou plusieurs châssis (3).

9. Structure selon la revendication 7 caractérisé en ce qu'il y a trois panneaux pour chaque intervalle entre les échelons (10) du châssis (3) et deux ou plusieurs châssis (3).

10. Structure selon la revendication 7 caractérisé en ce qu'il y a quatre panneaux pour chaque intervalle entre les échelons (10) du châssis (3) et deux ou plusieurs châssis (3).

11. Structure selon n'importe laquelle des revendications 7 à 9 caractérisée en ce qu'elle comprend une croix latérale de renfort (8).

12. Structure selon la revendication 10 à laquelle est adjointe pour chaque intervalle un fond et un toit et à laquelle est adjointe en outre deux ou trois côtés d'étanchéité (23) permettant de réaliser un coffrage démoulable pour béton ou toute autre matériau formable, qui laisse après démoulage la forme tridimensionnelle de la structure originelle réduite de l'épaisseur des châssis (3), de l'épaisseur des panneaux découpés (21, 2, 23, 5) et de la portion des bandes de saillie dépassant des montants (9) et des échelons (10) des châssis (3).

13. Structure selon n'importe laquelle des revendications 7 à 11 ou assemblée selon le procédé des revendications 1 à 6, caractérisée en ce qu'elle est rendue définitive et non démontable par opérations de collage, vissage ou clouage réalisée sur ses différents constituants.

14. Utilisation d'une structure selon n'importe laquelle des revendications 7 à 11 pour réaliser une cloison, un mur à claire-voie, ou l'âme de ces deux entités, une poutre une bibliothèque, un meuble de rangement.

15. Utilisation d'une structure selon la revendication 10 pour réaliser un coffrage démoulable.

## Patentansprüche

1. Verfahren zum Zusammenbau einer starren, dreidimensionalen, auseinandernehmbaren oder nicht-auseinandernehmbaren, fachförmigen Struktur aus wenigstens zwei Chassis (3) in der Form von Rahmen, Leitern oder Gittern mit nebeneinander liegenden, aus einem Stück bestehenden oder durch mechanische Mittel miteinander verbundenen Pfosten (9) und aus Sprossen (10) und wenigstens zwei seitlichen, ausgeschnittenen, rechteckförmigen Platten (2, 21, 5) und/oder einer Bodenplatte (21) und/oder einem Dach (5),
**dadurch gekennzeichnet,**
**dass** der Zusammenbau zwischen Chassis (3) und Platten (2, 21, 5) durch ein schräges Einsetzen und durch kraftschlüssige Verkeilung der Platten (2, 21, 5) in den Öffnungen der Chassis (3) senkrecht zu der Ebene der Chassis (3) erfolgt,
**dass** die Verkeilung der Platten (2) - und demzufolge die Versteifung der gesamten Struktur - durch Aufrichten unter Krafteinwirkung erfolgt, bis ihre vertikale Schnittkante parallel an den Pfosten (9) der Chassis (3) anliegt,
die Höhe der Platten (2) etwas größer ist als der Zwischenraum zwischen zwei Sprossen (10) und dass dieser Zwischenraum bestimmt ist durch
a. den Abstand zwischen zwei Sprossen (10)
b. den effektiven Abstand zwischen einer Sprosse (10) und der Dicke einer Bodenplatte (21) und schließlich
c. den effektiven Abstand zwischen der Bodenplatte (21) und einer Dachplatte (5) und
**dass** schließlich der Abstand zwischen den Chassis (3) der Struktur abhängig ist von der Wahl der Lage von Kerben (7) und/oder Nuten (61) am oberen Ende und/oder am unteren Ende und/oder gegebenenfalls entlang den Platten, die Gesamttiefe der Struktur gleich dem Abstand zwischen den Chassis (3), zuzüglich des größten Überstands der Platten nach vorne und nach hinten über die Pfosten (9) und die Sprossen (10) der Chassis (3), ist.

2. Verfahren nach Anspruch 1,
**dadurch gekennzeichnet,**
**dass** die ausgeschnittenen Platten (2, 21, 5) und/oder die Chassis (3) durch einen Säge- oder Gießvorgang hergestellt werden.

3. Verfahren nach Anspruch 1,
**dadurch gekennzeichnet,**
**dass** außerdem wenigstens eine der Platten (2, 21, 5) aus einer oder mehreren massiven Ausgangsplatten (1) ausgeschnitten wird und letztere nach dem Ausschneiden ein oder die Chassis (3) bildet.

4. Verfahren nach dem vorangegangenen Anspruch,
**dadurch gekennzeichnet,**
**dass** wenigstens eine der ausgeschnittenen Platten (21) ein Rechteck bildet, dessen Länge gleich der Höhe ist, vergrößert um die doppelte Tiefe der auf der Platte (21) vorgesehenen Kerben (7).

5. Verfahren nach einem der vorangehenden Ansprüche,
**dadurch gekennzeichnet,**
**dass** die Platten (2, 21, 5) durch Schneiden mit einem Laser oder durch ein Stanzwerkzeug ausgeschnittene Platten sind.

6. Verfahren nach einem der vorangehenden Ansprüche,
**dadurch gekennzeichnet,**
dass die Platten aus einem Ausschneiden in zwei oder drei identischen Ausgangsplatten (1) stammen und dadurch Chassis (3) bilden, deren Breite und Länge die Breite und die Höhe der Struktur bestimmen.

7. Dreidimensionale starre Struktur aus wenigstens zwei flachen, parallelen Chassis (3) mit einer oder mehrere Sprossen (10) und Pfosten (9) bildenden Aussparungen und zwei Arten von Platten (2, 21), die ausgeschnitten und durch einen Sägevorgang oder einen Gießvorgang gebildet sind und senkrecht zu der Ebene des Chassis liegen,
**dadurch gekennzeichnet,**
**dass** die Platten der ersten Art, die durch die seitlichen Platten (2) gebildet sind, an den Pfosten (9) von wenigstens zwei Chassis (3) anliegen und mit Kerben und/oder Nuten (61) versehen sind, die eine Schnittkante bzw. eine Sprosse (10) umfassen und/oder einen Pfosten (9) des Chassis (3) versehen sind und dass die seitlichen Platten (2) senkrecht zu den Pfosten der Chassis (3) auf den die Platten der zweiten Art bildenden Bodenplatten (21) ruhen und mit Kerben (7) und/oder Nuten (61) versehen sind, die eine Schnittkante der Chassis umfassen.

8. Struktur nach Anspruch 7,
**dadurch gekennzeichnet,**
**dass** sie für jeden Zwischenraum zwischen den Sprossen (10) des Chassis (3) und zwei oder mehreren Chassis (3) zwei gesägte, gestanzte oder gegossene Platten (2, 21, 5) enthält.

9. Struktur nach Anspruch 7,
**dadurch gekennzeichnet,**
**dass** sie für jeden Zwischenraum zwischen den Sprossen (10) des Chassis (3) und zwei oder mehreren Chassis (3) drei Platten enthält.

10. Struktur nach Anspruch 7,
**dadurch gekennzeichnet,**
**dass** sie für jeden Zwischenraum zwischen den Sprossen (10) des Chassis (3) und zwei oder mehreren Chassis (3) vier Platten enthält.

11. Struktur nach einem der Ansprüche 7 bis 9,
**dadurch gekennzeichnet,**
**dass** sie ein seitliches Verstärkungskreuz (8) enthält.

12. Struktur nach Anspruch 10, die zusätzlich für jeden Zwischenraum einen Boden und ein Dach und außerdem zwei oder drei Dichtungsseiten (23) enthält, die einen aufmachbaren Behälter für Zement oder jedes andere verformbare Material bilden können, der nach dem Auseinandernehmen die dreidimensionale Form der ursprünglichen Struktur belässt, verringert um die Dicke des Chassis (3), die Dicke der ausgeschnittenen Platten (21, 2, 23, 5) und den Teil der über die Pfosten (9) überstehenden Streifen und die Sprossen (10) des Chassis (3).

13. Struktur nach einem der Ansprüche 7 bis 11 oder Anordnung nach dem Verfahren der Ansprüche 1 bis 6,
**dadurch gekennzeichnet,**
**dass** sie endgültig ausgebildet und durch Vorgänge einer Verklebung, Verschraubung oder Vernagelung für die verschiedenen Bestandteile nicht auseinandernehmbar ist.

14. Anwendung einer Struktur nach einem der Ansprüche 7 bis 11 für die Bildung einer Trennwand, einer durchsichtigen Mauer oder einer Innenwand aus zwei Einheiten, eines Bücherregals oder eines Aufstellmöbels.

15. Anwendung einer Struktur nach Anspruch 10 für die Bildung eines auseinandernehmbaren Behälters.

## Claims

1. A method of assembly for a dismountable or non-dismountable and alveolated rigid tridimensional structure from at least two chassis (3) in the form of frames, ladders or trellises, with uprights being adjacent or integral, or joined by any mechanical means and rungs (10), and at least two cut-out rectangular panels (2, 21, 5) which are lateral (2) and/or base (21) and/or cover (5) panels,
characterized in that
- the assembly between the chassis (3) and the panels (2, 21, 5) is effected by the inclined insertion and by wedging with force of said panels (2, 21, 5), in the empty spaces of said chassis (3), perpendicularly to the plane of said chassis (3)
and in that the wedging of the panels (2) - and consequently the rigidification of the whole structure - results from the forced righting of these same panels until their vertical section is parallel and tangent to the uprights (9) of the chassis (3),
- the height of the aforesaid panels (2) being slightly greater than the space separating two rungs (10), whether this space is the distance defined by
a) the distance separating two rungs (10),
b) the actual distance separating a rung (10) and the thickness of a base plate (21), or ultimately the
c) actual distance separating a base plate (21) and a top cover,
and further in that the distance between the chassis (3) of the structure is in function of the choice of location of notches (7) and/or of grooves (61) provided above and/or below and/or possibly along the panels,
the total depth of the aforesaid structure being equal to the distance between the chassis (3) added to the greatest projecting strip of the panels protruding in front and behind the uprights (9) and the rungs (10) of the chassis (3).

2. The process according to claim 1 characterized in that the cut-out panels (2, 21, 5) and/or the chassis (3) are the result of a sawing or molding operation.

3. The process according to claim 1 wherein furthermore at least one of the panels (2, 21, 5) has been cut out in one or more original full panels (1), the latter(s) forming after the cut-out operation one or several chassis (3).

4. The process according to claim 1 wherein at least one of the cut-out panels is a rectangular panel (21) wherein the length is equal to the height plus twice the depth of the notches (7) provided on said panel (21).

5. The process according to any of the preceding claims characterized in that the panels (2, 21, 5) are cut-out by punching or laser cutting.

6. The process according to any of the preceding claims characterized in that the panels originated from a cut-out operation of two or three identical starting panels (1), in order to produce chassis (3) where the width and the length are determined by the width and the length of the structure.

7. A rigid tridimensional structure made of at least flat parallel chassis (3) comprising one or several openings forming rungs (10) and uprights (9), and made of two types of panels (2, 21), cut-out and resulting from a sawing or molding operation, located perpendicularly to the plane of the chassis characterised in that the first type of panels being lateral panels (2) are placed tangent to the uprights (9) of at least two chassis (3) and are provided with notches and/or grooves (61) gripping a edge of respectively a rung (10) and/or upright (9) of chassis (3), said lateral panels (2) resting on base panels (21) being the second type of panels, perpendicular to the uprights of the chassis (3), said base panels being provided with notches (7) and/or grooves (61) gripping the cut edge of the chassis.

8. The structure according to claim 7, characterized in that there are
- 2 panels (2, 21, 5) sawn, punched or molded, for each space between the rungs (10) of the chassis (3) and two or more chassis (3).

9. The structure according to claim 7, characterized in that there are
- 3 panels for each space between the rungs 10) of the chassis (3) and two or more chassis (3).

10. The structure according to claim 7, characterized in that there are
- 4 panels for each space between the rungs (10) of the chassis (3) and two or more chassis (3).

11. The structure according to any of the claims 7 to 9 wherein there is added a central reinforcing cross (8).

12. The structure according to claim 10 wherein there is added for each empty space a cover, and a back wall and wherein there is added furthermore two or three impermeable sides (23) allowing the construction of a strippable casing for concrete or any other moldable material, which leaves after demolding the tridimensional shape of the original structure less the thickness of the chassis (3), the thickness of the cut-out panels (21, 2, 23, 5) and of the part of the projecting strip protruding past the uprights (9) and the rungs (10) of the chassis (3).

13. Structure according to any of the claims 7 to 11 or assembled according the process of any of the claims 1 to 6 characterised that it is made permanent and non-dismountable by operations of gluing, screwing, nailing carried out on its various components.

14. Use of a structure according to any of the claims 7 to 11 for the construct of a partition, or an openwork wall, or the essence of these two entities, a beam, a bookcase or a storage unit.

15. Use of a structure according to claim 10 for the construct of a strippable casing.
